# EUROPEAN PATENT SPECIFICATION

(11) **EP 1 406 144 B1**
(45) Date of publication and mention of the grant of the patent: **23.01.2008**
(21) Application number: 03022306.9
(22) Date of filing: 02.10.2003
(51) Int. Cl.: G05G 1/14, B60K 26/02, G05G 1/16

(54) **Accelerator pedal for industrial vehicle**
Fahrpedal für ein Nutzfahrzeug
Pédale d'accélérateur pour un véhicule industriel

(30) Priority: 03.10.2002 JP 2002291418
(43) Date of publication of application: 07.04.2004
(73) Proprietor: KABUSHIKI KAISHA TOYOTA JIDOSHOKKI, Kariya-shi, Aichi-ken (JP)
(72) Inventor: Takenaka, Takaaki, Kariya-shi Aichi-ken (JP)
(74) Representative: TBK-Patent

(56) References cited:
- FR-A- 1 501 883
- US-A- 2 008 149
- US-A- 2 968 967
- US-A- 4 010 657
- US-A- 4 250 768
- US-A- 5 609 069

## Description

The present invention relates to an accelerator pedal according to the preamble of claim 1.

Conventionally, with respect to an industrial vehicle, such as a cargo vehicle and a construction equipment, for traveling at relatively low speed, it is generally known that forward travel and reverse travel of the vehicle is operated by an accelerator pedal for an industrial vehicle in such a manner that a selector pedal of the accelerator pedal is switched for switching between forward travel and reverse travel, for example, as disclosed in the specification and FIG. 2-7 of US-4 250 768.

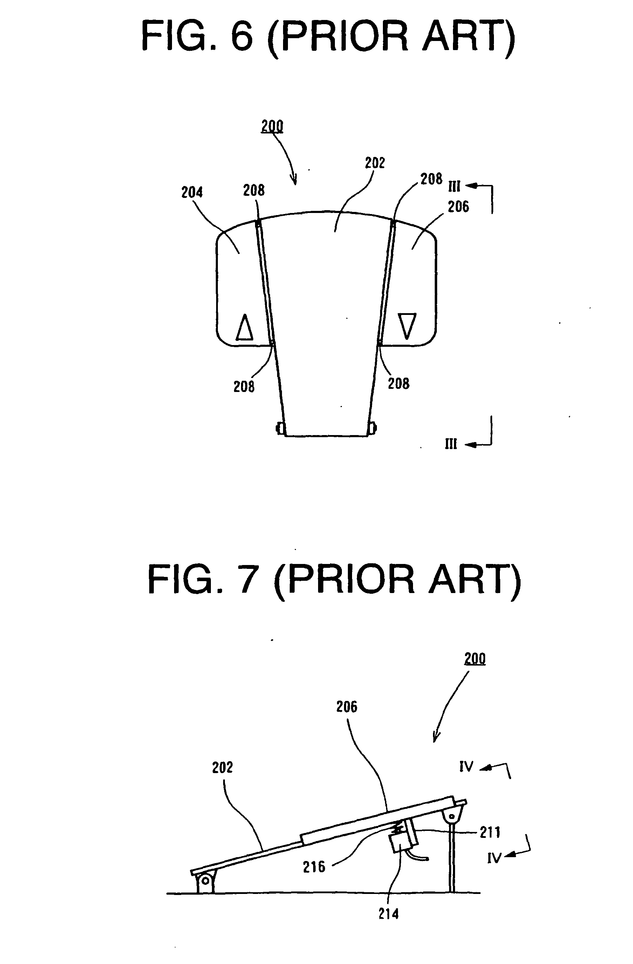

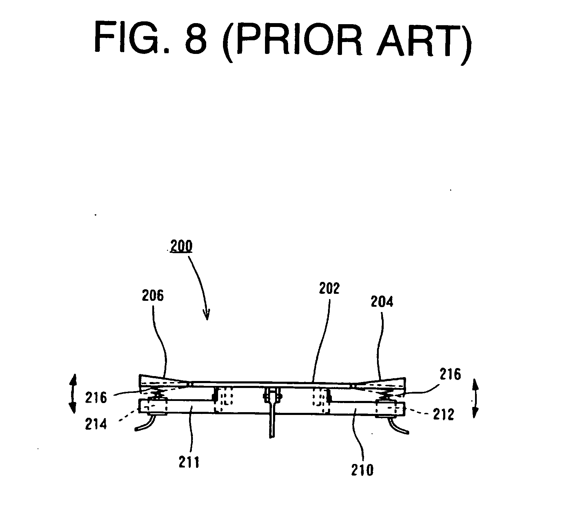

Now referring to FIGs. 6 through 8, FIG. 6 illustrates a plan view of an accelerator pedal 200 for an industrial vehicle according to a prior art, FIG. 7 illustrates a side view of the accelerator pedal 200 as seen from the line III-III in FIG. 6, and FIG. 8 illustrates a front end view of the accelerator pedal 200 as seen from the line IV-IV in FIG. 7. This accelerator pedal 200, as shown in FIGs. 6 through 8, includes a main pedal 202 for adjusting the degree of acceleration and forward and reverse selector pedals 204, 206 respectively for forward travel and reverse travel.

The main pedal 202 provides fulcrum shafts 208 on each side, and the fulcrum shafts 208 are respectively arranged on the upper side and the lower side as shown in FIG. 6. The forward selector pedal 204 is pivotally provided on one side relative to the main pedal 202 through the fulcrum shafts 208. Similarly, the reverse selector pedal 206 is pivotally provided on the other side.

Support members 210, 211 are connected to the back surface of the main pedal 202 and respectively extend to face the forward and reverse selector pedals 204, 206. The support members 210, 211 provide a forward switch 212 for forward travel and a reverse switch 214 for reverse travel so as to face the forward and reverse selector pedals 204, 206, respectively.

Additionally, a coil spring 216 is interposed between the forward selector pedal 204 and the forward switch 212 and urges the forward selector pedal 204 upward from the lower side. Similarly, a coil spring 216 is interposed between the reverse selector pedal 206 and the reverse switch 214 and urges the reverse selector pedal 206 upward.

Accordingly, as an operator pushes the forward selector pedal 204 with his or her foot, the forward selector pedal 204 pivots downward to turn on the forward switch 212. Additionally, pushing the main pedal 202 causes the vehicle to travel forward.

Then, as the operator switches from the forward selector pedal 204 to push the reverse selector pedal 206, the forward selector pedal 204 returns to its original position by the urging force of the coil spring 216 so that the forward switch 212 turns off. In the meantime, the reverse switch 214 turns on, and pushing the main pedal 202 causes the vehicle to travel in reverse.

An unwanted feature is that the forward and reverse selector pedals 204, 206 are provided to sandwich the main pedal 202 for the above described conventional accelerator pedal 200 so that the operator's foot tends to move at a relatively long distance when switching between forward travel and reverse travel.

Therefore, it is difficult to switch between forward travel and reverse travel without moving the operator's foot on the accelerator pedal 200, and the operation for switching between forward travel and reverse travel causes operator's fatigue. Additionally, there is a problem that the additional movement of the foot increases an obstacle to a rapid operation for switching.

With respect to the conventional accelerator pedal 200, for example, the forward travel is performed by pushing the forward selector pedal 204 with the main pedal 202 being pushed. As a result, the sole of the foot on the side of the big toe continuously receives force at a limited part, while the ankle need be moved for pushing the main pedal 202.

Thus, in the conventional accelerator pedal 200, even if the forward travel and the reverse travel need not be switched, one of the forward selector pedal 204 and the reverse selector pedal 206 need continuously be pushed. As a result, there has been generated additional fatigue.

Furthermore, in the conventional accelerator pedal 200, the forward selector pedal 204 and the reverse selector pedal 206 are independently provided from each other so that the respective coil springs 216 and the like for returning these pedals 204, 206 are required. As the urging force of the coil spring 216 is excessively strong, the pedals 204, 206, when pushed, require strong pushing force so as to promote muscle fatigue. As the urging force is relatively weak, the pedals 204, 206 may not return to their original positions even if the foot leaves from the pedals 204, 206. Thus, there is a question against the certainty of operation for the pedals 204, 206.

The surfaces of the main pedal 202, the forward selector pedal 204 and the reverse selector pedal 206 are smooth in the conventional accelerator pedal 200 so that the foot may slip away from the respective pedals 202, 204, 206 when switching between the pedals. Therefore, there is a need for an accelerator pedal for an industrial vehicle to reduce operator's fatigue and to quickly switch between the pedals and additionally to prevent operator's foot from slipping away from the pedal and to reliably switch between the forward travel and the reverse travel.

US-2 968 967 discloses a generic accelerator pedal comprising a main pedal for adjusting an opening degree of acceleration, and a selector pedal pivotally supported on the main pedal for switching between forward travel and reverse travel, the selector pedal including a selector pedal body, a forward step provided on the selector pedal body for the forward travel, and a reverse step provided on the selector pedal body in parallel with the forward step for the reverse travel, wherein at least one of the forward and reverse steps is mounded from the selector pedal body and at least one of surfaces of the forward and reverse steps provides a protuberance.

Other accelerator pedals are known from US-2 008 149 and US-4 010 657.

It is the object of the present invention, to provide an accelerator pedal which enables an easier operation of the accelerator pedal and which prevents a slip upon operating the accelerator pedal.

This object is solved by the accelerator pedal having the features of claim 1. The invention is further developed, as it is defined in the dependent claims.

Other aspects and advantages of the invention will become apparent from the following description, taken in conjunction with the accompanying drawings, illustrating by way of example the principles of the invention.

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a plan view of an accelerator pedal with partially cut away according to a first preferred embodiment of the present invention;
FIG. 2 is a cross-sectional view that is taken along the line I-I in FIG. 1;
FIG. 3 is a cross-sectional view that is taken along the line II-II in FIG. 1;
FIG. 4 is a cross-sectional front end view of an accelerator pedal according to a comparative example which does not belong to the present invention;
FIG. 5A is a cross-sectional explanatory view of a protuberance of an accelerator pedal according to another comparative example which does not belong to the present invention;
FIG. 5B is a cross-sectional explanatory view of a protuberance of an accelerator pedal according to an alternative embodiment of the present invention;
FIG. 5C is a cross-sectional explanatory view of a protuberance of an accelerator pedal according to an alternative embodiment of the present invention;
FIG. 5D is a cross-sectional explanatory view of a protuberance of an accelerator pedal according to an alternative embodiment of the present invention;
FIG. 5E is a cross-sectional explanatory view of a protuberance of an accelerator pedal according to an alternative embodiment of the present invention;
FIG. 6 is a plan view of an accelerator pedal according to a prior art;
FIG. 7 is a side view of the accelerator pedal as seen from the line III-III in FIG. 6; and
FIG. 8 is a front end view of the accelerator pedal as seen from the line IV-IV in FIG. 7.

### DETAILED DESCRIPTION OF THE PREFERRED EMBODIMENTS

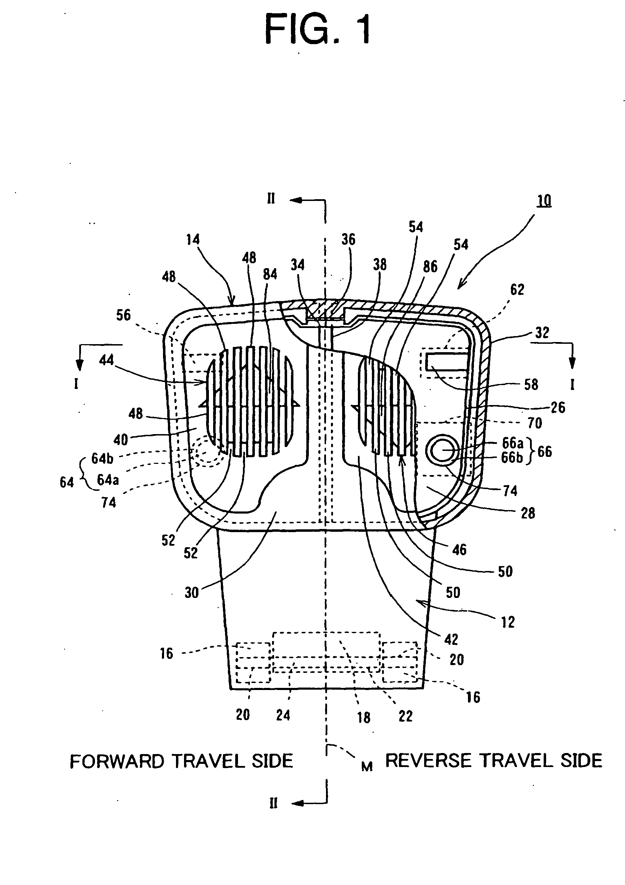

A first preferred embodiment of the present invention will now be described with reference to FIGs. 1 through 3. An accelerator pedal for an industrial vehicle is applied to a forklift truck or an industrial vehicle in the first preferred embodiment.

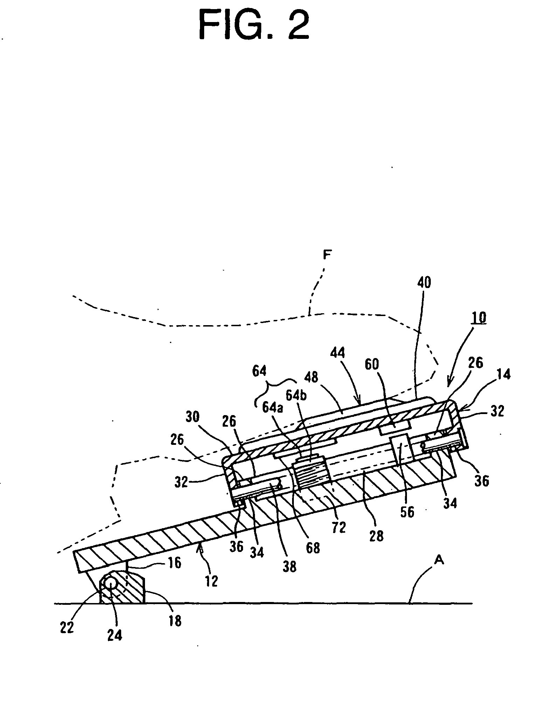

As shown in FIG. 2, an accelerator pedal 10 for an industrial vehicle is provided on a floor surface A of operator's seat of the forklift truck. The accelerator pedal 10 includes a main pedal 12 for adjusting the opening degree of acceleration and a selector pedal 14 for switching between forward travel and reverse travel.

The main pedal 12 will now be described. A pair of bearings 16 is provided at the back side of the proximal portion of the main pedal 12, while a hinge 18 is fixedly connected to the floor surface A so as to correspond with the proximal portion of the main pedal 12. Then, a pivotal pin 24 is inserted through shaft holes 20, which are respectively formed in the bearings 16, and a shaft hole 22 of the hinge 18.

Accordingly, the main pedal 12 is pivotal in a predetermined angular range relative to the floor surface A.

A side wall 26 surrounds a region that ranges from the middle of the main pedal 12 to the distal end thereof. A surrounding portion 28 is formed inside the side wall 26, and its outline is substantially similar to the shape of the selector pedal 14 for switching between forward travel and reverse travel.

The selector pedal 14 will now be described.

As shown in FIG. 1, a selector pedal body 30 forms a plate in shape, and its outline is substantially similar to the surrounding portion 28 that is formed on the main pedal 12. A rib 32 is formed at the periphery of the back side of the selector pedal body 30 and ranges along the entire periphery.

The selector pedal 14 of the first preferred embodiment is made of resin such as polypropylene. However, the selector pedal 14 may be made of metal.

The selector pedal 14 is provided on the main pedal 12 in such a manner that the selector pedal body 30 covers the side wall 26 and the surrounding portion 28 of the main pedal 12.

Incidentally, a fulcrum point is located on a hypothetical longitudinal centerline M of the main pedal 12 and the selector pedal 14 so that the selector pedal 14 is pivoted seesaw relative to the main pedal 12.

As described in detail, as shown in FIGs. 1 and 2, through holes 34 are respectively provided at the positions where the hypothetical longitudinal centerline M of the main pedal 12 intersects with the side wall 26, while through holes 36 are formed at the positions facing the through holes 34 in the rib 32 of the selector pedal body 30. A fulcrum pin 38 is inserted through these through holes 34, 36.

A forward step 40 for forward travel is provided on the surface of the selector pedal body 30 on one side (the left side in FIG. 1) relative to the hypothetical longitudinal centerline M, while a reverse step 42 for reverse travel is provided on the other side (the right side in FIG. 1). Namely, the forward and reverse steps 40, 42 are symmetrically arranged relative to the hypothetical longitudinal centerline M.

Both the forward and reverse steps 40, 42 of the first preferred embodiment are mounded from the surface of the selector pedal body 30, and protuberances 44, 46 are respectively provided around the middle portions of the forward and reverse steps 40, 42. Namely, the protuberances 44, 46 are further raised from the forward and reverse steps 40, 42, which are mounded from the surface of the selector pedal body 30. The shape and the structure of the protuberances 44, 46 are not limited. Additionally, the forward and reverse steps 40, 42 may provide a shape that is similar to that of the protuberances 44, 46.

In the first preferred embodiment, a plurality of protrusions 48, which are arranged in parallel with each other, constitutes the protuberance 44 of the forward step 40. The surface of the protuberance 44 gradually increases its height from the inside of the selector pedal 14 to the outside thereof. As described in detail, the protrusions 48 of the protuberance 44 reduce their heights relative to the surface of the forward and reverse steps 40 toward the inside of the selector pedal 14 and increase their heights toward the outside of the selector pedal 14. Similarly, a plurality of protrusions 50 constitutes the protuberance 46 of the reverse step 42, and the protuberance 50 increases its height from the inside of the selector pedal 14 toward the outside thereof.

These protrusions 48, 50 respectively form slits 52, 54, which indicate a forward arrow 84 for forward travel and a reverse arrow 86 for reverse travel, respectively. The forward arrow 84 and the reverse arrow 86 serve as direction indicators. The direction indicators indicate traveling directions of the forward and reverse steps 40, 42 so as not to erroneously push the selector pedal 14 by the operator. The forward and reverse arrows 84, 86 may be replaced by characters or by other graphics.

Incidentally, both the protuberances 44, 46 are preferably provided to contact the sole of operator's foot when the foot is put on the selector pedal 14 so as to push the selector pedal 14 without moving operator's foot.

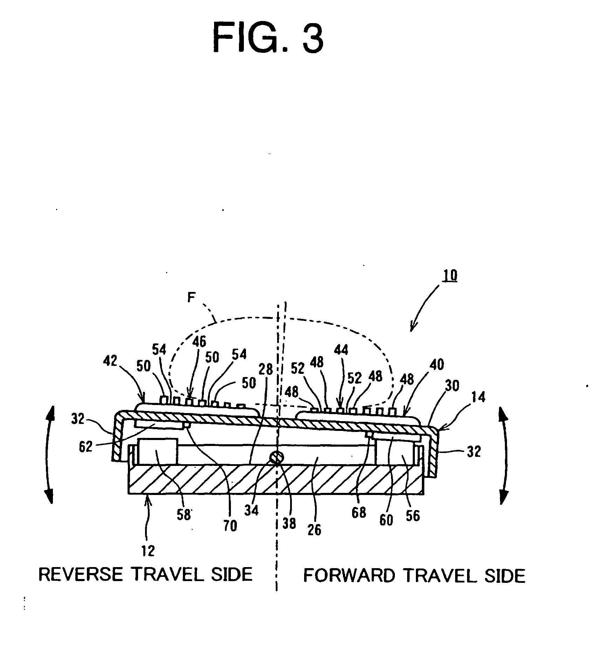

For example, the protuberances 44, 46 are in contact with the sole of a foot F when the foot F is put on the accelerator pedal 10, as shown in FIG. 3. In this state, in comparison to an accelerator pedal provided only with a step having a horizontal plane, since the surfaces of the protuberances 44, 46 increase their heights from the inside of the selector pedal 14 toward the outside thereof, a slight movement of the knee performs pedal-switching when the foot sole is inclined without large lateral movement of operator's knee.

As described above, the selector pedal 14 covers the surrounding portion 28 of the main pedal 12 and pivots seesaw about the main pedal 12. A switch contact portion 60 for the forward switch 56 and a switch contact portion 62 for the reverse switch 58 are both attached on the back side of the selector pedal 14.

The above described switches 56, 58 electrically control to change between forward travel and reverse travel and are arranged on the surrounding portion 28 of the main pedal 12. Pressed by the switch contact portion 60, the switch 56 turns on. When the switch contact portion 60 is not pressing the switch 56, the switch 56 is off. Pressed by the switch contact portion 62, the switch 58 turns on. When the switch contact portion 62 is not pressing the switch 58, the switch 58 is off.

Thus, in the selector pedal 14, as one of the steps 40, 42 approaches the main pedal 12, the other of the steps 40, 42 alternatively leaves away from the main pedal 12. Namely, the switches 56, 58 are ON/OFF relationship with each other. An ON/OFF state of the switches 56, 58 is substantially and synchronously switched by a single pedal-switching operation.

The accelerator pedal 10 is especially designed to reliably maintain an ON or OFF state of the respective switches 56, 58 by pushing the selector pedal 14. Namely, magnet portions 64, 66 are respectively provided near the side wall 26 in the width direction (the lateral direction in FIG. 1) of the surrounding portion 28 of the main pedal 12. Metal plates 68, 70 are respectively provided on the back side of the selector pedal 14 to correspond with the magnet portions 64, 66 for receiving magnet force of the magnet portions 64, 66. For example, when the forward step 40 is pushed, as shown in FIG. 3, the forward switch 56 turns on, and the magnet portion 64 of the forward step 40 attracts the metal plate 68 so that the forward switch 56 keeps its ON state unless the reverse step 42 is pushed. Accordingly, even if the pedal-switching is not operated, one of the magnet portions 64, 66 is attracted to the corresponding one of the metal plates 68, 70.

Incidentally, bolt holes 72, 74 are formed in the surrounding portion 28. Bolts 64b, 66b, which respectively bury magnets 64a, 66a, are disposed through the bolt holes 72, 74. The bolts 64b, 66b and the magnets 64a, 66a respectively constitute the magnet portions 64, 66. The heights of the bolts 64b, 66b relative to the main pedal 12 are adjusted to control the timing between the operation for switching the selector pedal 14 and an ON/OFF state of the switches 56, 58.

The concrete operation for the accelerator pedal 10 according to the first preferred embodiment will now be described.

The operator puts the right foot on the main pedal 12 and the selector pedal 14 in such a manner that the central axis of the foot sole coincides with the hypothetical longitudinal centerline M. Then, the inside of the foot sole contacts the protuberance 44 of the forward step 40, while the outside of the foot sole contacts the protuberance 46 of the reverse step 42. With respect to the selector pedal 14, due to the action of the magnet portions 64, 66, one of the forward switch 56 and the reverse switch 58 is continuously in an ON-state, while the other is in an OFF-state.

For example, in an initial state of the selector pedal 14, the forward switch 56 is in an OFF-state, and the reverse switch 58 is in an ON-state. In this state, when the operator intends to travel forward, the operation is performed only by inclining the foot sole inside. The selector pedal 14 pivots about the fulcrum pin 38 as a fulcrum through the protuberance 44.

Then, the switch contact portion 62 leaves away from the reverse switch 58 to turn off, while the switch contact portion 60 approaches the forward switch 56. However, when the inclination of the selector pedal 14 reaches a predetermined inclination angle, the magnet force of the magnet portion 64 effectively acts on the metal plate 68 so that the forward switch 56 is pressed by the switch contact portion 60 based on the attraction between the magnet portion 64 and the metal plate 68. Then, the forward switch 56 turns on, and pushing the main pedal 12 in the above state causes the vehicle to travel forward. Additionally, when switching from the forward travel to the reverse travel, the operator is only required to incline the foot sole outside.

According to the first preferred embodiment, the following advantageous effects are obtained.

Since the foot sole contacts both the protuberances 44, 46 at a time, the forward step 44 or the reverse step 46 is pushed through the respective protuberances 44, 46 by shifting the center of gravity of the foot sole.

Additionally, in addition to the capability of switching the selector pedal 14 without moving the foot sole, the selector pedal 14 may be switched by moving the position of the foot sole if necessary.

Furthermore, since the steps 40, 42 are mounded and the accelerator pedal 10 provides the protuberances 44, 46, pedal-switching operation requires relatively small inclination of the foot sole.

Accordingly, operator's fatigue upon switching operation of the selector pedal 14 is reduced, and the pedal is quickly switched.

Since the protuberances 44, 46 are constituted of many protrusions 48, 50, they prevent the foot from slipping away from the selector pedal 14, and in addition, every pedal-switching operation removes dirt on the foot sole (the sole of a shoe) by a plurality of the protrusions 48, 50.

Since the surfaces of the protuberances 44, 46 increases their heights from the inside of the selector pedal 14 toward the outside thereof, close adherence between the foot sole and the protuberances 44, 46 improves, and the inclination of the foot sole required for pedal-switching operation becomes small. As a result, operator's fatigue due to pedal-switching operation is reduced, and the pedal is quickly switched.

When traveling continues after switching to the forward travel or the reverse travel, the selector pedal 14 is pivoted and maintained to one of the forward travel and the reverse travel by the magnet portions 64, 66. The operator need not continuously apply force on the limited part of the foot sole on the big toe side or on the little toe side for pushing the conventional forward selector pedal or the conventional reverse selector pedal but only needs to move the ankle up and down for pushing the main pedal 12. As a result, operator's fatigue of the foot is reduced.

Moreover, when the magnet portions 64, 66 contact the metal plates 68, 70 due to magnet force, the operator can sense the contact through the foot sole so that the operator knows the moment to turn on one of the switches 56, 58 with the feeling.

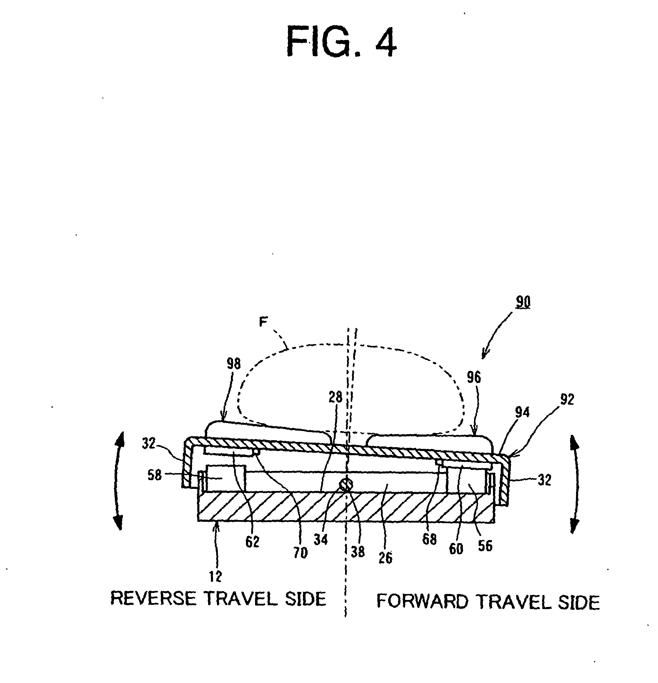

A comparative example will now be described with reference to FIG. 4. The structure of the selector pedal 14 in the accelerator pedal 10 described in the first preferred embodiment is partially modified in the comparative example. The same reference numerals denote the substantially identical components to those of the first preferred embodiment, and the description is omitted.

As shown in FIG. 4, an accelerator pedal 90 of the comparative example provides a selector pedal 92 on the main pedal 12 for switching between forward travel and reverse travel. The surface of a selector pedal body 94 provides a mounded forward step 96 for forward travel and a mounded reverse step 98 for reverse travel. The surfaces of the steps 96, 98 increase their heights from the inside of the main pedal 12 toward the outside thereof.

Accordingly, the steps 96, 98 form inclined surfaces which increase their heights from the inside of the main pedal 12 toward the outside thereof. The surfaces of the steps 96, 98 respectively indicate arrows (not shown) or direction indicators for forward travel and reverse travel.

According to the comparative example, the following advantageous effects are obtained.

The close adherence of the foot sole is improved without providing the protuberance of the first preferred embodiment on the steps 96, 98. Also, the pedal is switched for forward travel and reverse travel without moving the foot sole on the selector pedal 92.

Additionally, the structure of the selector pedal 92 is simplified so that time for manufacturing the selector pedal 92 is shortened, and cost for manufacturing the selector pedal 92 is reduced.

The present invention is not limited to the first embodiment described above but may be modified into the following alternative embodiments. Also, the following alternative embodiments may appropriately be combined with one another.

In alternative embodiments to those of the above preferred embodiments, only one of the forward step and the reverse step of the selector pedal is mounded. In this state, with sufficiently raising the mounded step, the selector pedal can be switched without moving the foot sole, and in addition the steps are distinctly recognized based upon the protuberances of the steps. As a result, the position for pushing is easily specified upon pedal-switching operation. Furthermore, only one of the mounded steps may provide a protuberance.

In alternative embodiments to those of the above preferred embodiments, the structure of the forward step is different from that of the reverse step. Concretely, the size or shape of the steps or the heights of the protuberances are differentiated from each other. Due to the difference between the structures of the steps, the positions of the steps are distinctly recognized so that the position for pushing is easily specified upon pedal-switching operation. Furthermore, the protuberances provided on the respective steps may have different structures.

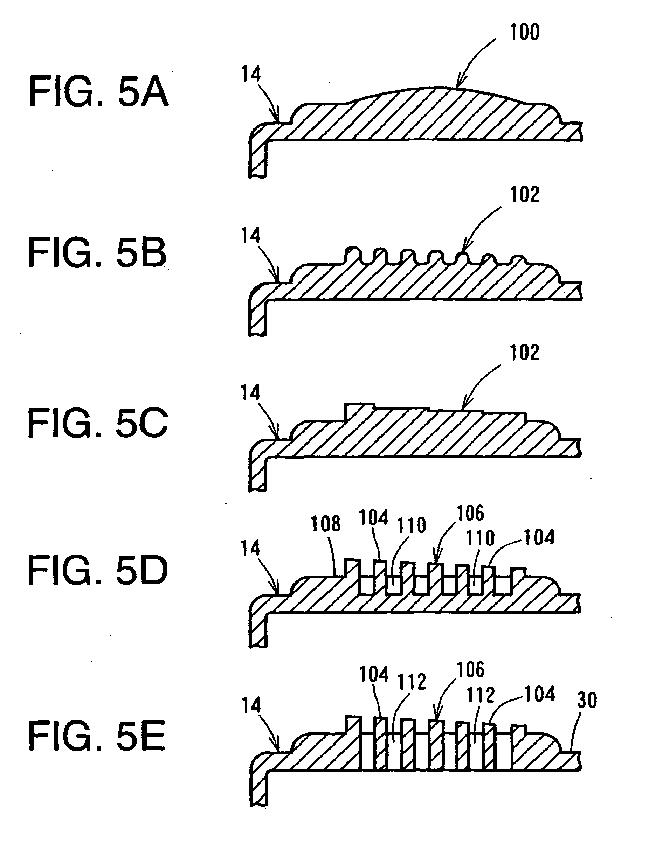

In another comparative example, the protuberance or the step may be semispherical in shape. For example, with respect to a semispherical step 100 shown in FIG. 5A, the foot sole contacts the step 100 substantially with point contact so that the position for pushing is easily specified upon pedal-switching operation.

In alternative embodiments to those of the above preferred embodiment, as shown in FIGs. 5B and 5C, the surface of a protuberance 102 is uneven or step-like in place of the inclined surface. In this state, the foot is prevented from slipping away from the surface of the protuberance 102, and in addition dirt on the sole is removed every pedal-switching operation. Furthermore, this shape of the surface of the protuberance 102 may be applied to the surface of the step.

In alternative embodiments to those of the above preferred embodiment, as shown in FIG. 5D, with respect to a protuberance 106 constituted of a plurality of protrusions 104, the surface of a step 108 between the protrusions 104 is recessed to form grooves 110. Also, as shown in FIG. 5E, slits 112 are provided by punching the selector pedal body 30. When the bottom of these grooves 110 and components located below the slits 112 provide a direction indicator, the foot sole does not contact the direction indicator so that the direction indicator does not change in color and peel off. As a result, the cognition of the direction indicator is maintained. Furthermore, these grooves 110 and slits 112 may be applied to the step.

In alternative embodiments to those of the above preferred embodiments, since the protuberance is formed by cutting operation, the protuberance may separately be manufactured although the protuberance is formed integrally with the selector pedal body. In this state, the separately manufactured protuberance is attached to the step so that the selector pedal need not entirely be changed when the protuberance is worn or broken. Further, the separately manufactured protuberance may be detachable from the step if necessary. In this state, the protuberance, when worn or broken, is easily changed. Also, the structure of the protuberance may be applied to that of the step.

In alternative embodiments not forming part of the invention, instead of a plurality of the protrusions for constituting the protuberance, the protuberance may be formed in grid or may be provided with a recess. In this state, the foot is prevented from slipping away from the protuberance, and in addition dirt on the foot sole is removed every pedal operation.

In alternative embodiments to those of the above preferred embodiments, the step or the protuberance may be made of elastic material such as rubber instead of resin. In this state, the foot is prevented from slipping away from the protuberance or the step, and in addition the load on the foot sole is relieved. As a result, the fatigue upon pedal-switching operation is reduced.

Therefore, the present examples and embodiments are to be considered as illustrative and not restrictive, and the invention is not to be limited to the details given herein but may be modified within the scope of the appended claims.

## Claims

1. An accelerator pedal (10) for an industrial vehicle, comprising a main pedal (12) for adjusting an opening degree of acceleration, and a selector pedal (14) pivotally supported on the main pedal (12) for switching between forward travel and reverse travel, the selector pedal (14) including a selector pedal body (30), a forward step (40) provided on the selector pedal body (30) for the forward travel, and a reverse step (42) provided on the selector pedal body (30) in parallel with the forward step (40) for the reverse travel, wherein at least one of the forward and reverse steps (40, 42) is mounded from the selector pedal body (30) and at least one of surfaces of the forward and reverse steps provides a protuberance (44, 46; 102, 106), **characterized in that**
the surface of the protuberance (44, 46; 102, 106) increases its height from an inside of the selector pedal (14) toward an outside of the selector pedal (14), and
the protuberance (44, 46; 102, 106) is constituted of a plurality of protrusions (48, 50; 104).

2. The accelerator pedal (10) for the industrial vehicle according to claim 1, wherein a surface of the protuberance is uneven.

3. The accelerator pedal (10) for the industrial vehicle according to claim 1, wherein a surface of the protuberance is step-like.

4. The accelerator pedal for the industrial vehicle according to claim 1, wherein the protuberance is made of first elastic material.

5. The accelerator pedal for the industrial vehicle according to claim 4, wherein the first elastic material is selected from the group consisting of resin and rubber.

6. The accelerator pedal for the industrial vehicle according to claim 1, wherein at least one of the forward and reverse steps (40, 42) is made of second elastic material.

7. The accelerator pedal for the industrial vehicle according to claim 6, wherein the second elastic material is selected from the group consisting of resin and rubber.

8. The accelerator pedal for the industrial vehicle according to claim 1, wherein the selector pedal (14; 92) has a hypothetical longitudinal centerline, the forward and reverse steps (40, 42) being symmetrically arranged relative to the hypothetical centerline.

## Patentansprüche

1. Beschleunigungspedal (10) für ein gewerbliches Fahrzeug, mit einem Hauptpedal (12) zum Einstellen eines Beschleunigungsvorrichtungsöffnungsgrads und einem Selektorpedal (14), das an dem Hauptpedal (12) zum Schalten zwischen einer Vorwärtsfahrt und einer Rückwärtsfahrt schwenkbar gestützt ist, wobei das Selektorpedal (14) einen Selektorpedalkörper (30), einen Vorwärtsabsatz (40), der an dem Selektorpedalkörper (30) für die Vorwärtsfahrt vorgesehen ist, und einen Rückwärtsabsatz (42) aufweist, der an dem Selektorpedalkörper (30) parallel zu dem Vorwärtsabsatz (40) für die Rückwärtsfahrt vorgesehen ist, wobei zumindest einer von dem Vorwärts- und dem Rückwärtsabsatz (40, 42) von dem Selektorpedalkörper (30) erhaben ist und zumindest eine der Flächen des Vorwärts- und des Rückwärtsabsatzes eine Erhebung (44, 46; 102, 106) vorsieht, **dadurch gekennzeichnet, dass**
sich die Höhe der Fläche der Erhebung (44, 46; 102, 106) vom Inneren des Selektorpedals (14) zu einer Außenseite des Selektorpedals (14) erhöht, und
die Erhebung (44, 46; 102, 106) durch eine Vielzahl Vorsprünge (48, 50; 104) gebildet ist.

2. Beschleunigungspedal (10) für das gewerbliche Fahrzeug gemäß Anspruch 1, wobei eine Fläche der Erhebung uneben ist.

3. Beschleunigungspedal (10) für das gewerbliche Fahrzeug gemäß Anspruch 1, wobei eine Fläche der Erhebung absatzartig ist.

4. Beschleunigungspedal für das gewerbliche Fahrzeug gemäß Anspruch 1, wobei die Erhebung aus einem ersten elastischen Material geschaffen ist.

5. Beschleunigungspedal für das gewerbliche Fahrzeug gemäß Anspruch 4, wobei das erste elastische Material aus einer Gruppe ausgewählt ist, die Kunststoff und Gummi enthält.

6. Beschleunigungspedal für das gewerbliche Fahrzeug gemäß Anspruch 1, wobei zumindest der Vorwärts- oder der Rückwärtsabsatz (40, 42) aus einem zweiten elastischen Material besteht.

7. Beschleunigungspedal für das gewerbliche Fahrzeug gemäß Anspruch 6, wobei das zweite elastische Material aus einer Gruppe ausgewählt ist, die Kunststoff und Gummi enthält.

8. Beschleunigungspedal für das gewerbliche Fahrzeug gemäß Anspruch 1, wobei das Selektorpedal (14; 92) eine hypothetische Längsmittelachse aufweißt, wobei der Vorwärts- und der Rückwärtsabsatz (40, 42) relativ zu der hypothetischen Mittelachse symmetrisch angeordnet sind.

## Revendications

1. Pédale d'accélérateur (10) pour un véhicule industriel, comprenant une pédale principale (12) permettant d'ajuster un degré d'ouverture d'accélération, et une pédale de sélecteur (14) reposant, pour pivoter, sur la pédale principale (12) afin de commuter entre la marche avant et la marche arrière, la pédale de sélecteur (14) incluant un corps de pédale de sélecteur (30), une plage surélevée avant (40) fournie sur le corps de pédale de sélecteur (30) pour la marche avant, et une plage surélevée arrière (42) fournie sur le corps de pédale de sélecteur (30) parallèlement à la plage surélevée avant (40) pour la marche arrière, dans laquelle au moins l'une des plages surélevées avant et arrière (40, 42) forme un bourrelet par rapport au corps de pédale de sélecteur (30) et au moins l'une des surfaces des marches avant et arrière fournit une protubérance (44, 46 ; 102, 106), **caractérisée en ce que** :
la surface de la protubérance (44, 46 ; 102, 106) augmente en hauteur à partir de l'intérieur de la pédale de sélecteur (14) vers l'extérieur de la pédale de sélecteur (14), et
la protubérance (44, 46 ; 102, 106) est constituée d'une pluralité de saillies (48, 50 ; 104).

2. Pédale d'accélérateur (10) pour le véhicule industriel selon la revendication 1, dans laquelle une surface de la protubérance est inégale.

3. Pédale d'accélérateur (10) pour le véhicule industriel selon la revendication 1, dans laquelle une surface de la protubérance est semblable à une plage surélevée.

4. Pédale d'accélérateur pour le véhicule industriel selon la revendication 1, dans laquelle la protubérance est constituée d'un premier matériau élastique.

5. Pédale d'accélérateur pour le véhicule industriel selon la revendication 4, dans laquelle le premier matériau élastique est choisi parmi le groupe consistant en la résine et le caoutchouc.

6. Pédale d'accélérateur pour le véhicule industriel selon la revendication 1, dans laquelle au moins l'une des plages surélevées avant et arrière (40, 42) est constituée d'un deuxième matériau élastique.

7. Pédale d'accélérateur pour le véhicule industriel selon la revendication 6, dans laquelle le deuxième matériau élastique est choisi parmi le groupe consistant en la résine et le caoutchouc.

8. Pédale d'accélérateur pour le véhicule industriel selon la revendication 1, dans laquelle la pédale de sélecteur (14 ; 92) a une ligne de centre longitudinale hypothétique, les marches avant et arrière (40, 42) étant agencées symétriquement par rapport à la ligne de centre hypothétique.
